Europäisches Patentamt

European Patent Office

Office européen des brevets

(19)

(11) Veröffentlichungsnummer : **0 084 383**
**B1**

(12) **EUROPÄISCHE PATENTSCHRIFT**

(45) Veröffentlichungstag der Patentschrift :
18.06.86

(51) Int. Cl.⁴ : **B 02 C   4/02**

(21) Anmeldenummer : 83103515.9

(22) Anmeldetag : 12.04.83

(54) Verfahren zur kontinuierlichen Druckzerkleinerung spröden Mahlgutes.

(30) Priorität : 24.01.83 DE 3302176

(43) Veröffentlichungstag der Anmeldung :
27.07.83 Patentblatt 83/30

(45) Bekanntmachung des Hinweises auf die Patenterteilung : 18.06.86 Patentblatt 86/25

(84) Benannte Vertragsstaaten :
AT CH DE FR GB IT LI SE

(56) Entgegenhaltungen :
DE-A- 1 757 093
DE-A- 3 037 670
DE-B- 1 138 994
DE-B- 2 708 053
GB-A-    29 129
SU-A-    490 498
US-A- 4 116 390
A.F. TAGGART: "Handbook of mineral dressing, ores
and industrial minerals", 1945, Seiten 55-77, Absatz
4, John Wiley & Sons, New York, USA

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Beisner, Klaus
Zum Dormichweiher 12
D-5204 Lohmar 1 (DE)
Erfinder : Gemmer, Ludwig
Darmstädter Strasse 12
D-5000 Köln 1 (DE)
Erfinder : Zisselmar, Raimund, Dr.
Eifelstrasse 118
D-5042 Erftstadt 13 (DE)
Erfinder : Kellerwessel, Hans, Dr.
Morillenhang 49
D-5100 Aachen (DE)

(74) Vertreter : Beisner, Klaus, Dipl.-Ing. et al
c/o KHD Humboldt Wedag AG Patente und Lizenzen
Wiersbergstrasse Postfach 91 04 57
D-5000 Köln 91 (DE)

## Beschreibung

Die Erfindung betrifft ein Verfahren zur kontinuierlichen Druckzerkleinerung spröden Mahlgutes wie zum Beispiel Zementklinker.

Bei der Druckzerkleinerung spröden Mahlgutes im Walzenspalt einer Walzenmaschine wird das Mahlgut durch Druckbeanspruchung zerquetscht bzw. zerkleinert. Walzenbrecher bzw. Walzenmühlen werden meistens nach dem Prinzip der Einzelkornzerkleinerung betrieben, die zum Beispiel in Fig. 1 der DE-A-1 757 093 dargestellt ist. Die Korngröße des Aufgabegutes ist größer als der Walzenspalt, wobei die einzelnen Mahlgutbruchstücke im Walzenspalt nicht mehr weiter zerkleinert werden. Dazu führt man das Aufgabegut in so geringer Menge — über die Walzenbreite gleichmäßig verteilt — den Walzen zu, daß im Walzenspalt die Teilchen des Aufgabegutes sich nicht gegenseitig quetschen. Es wird sozusagen zwischenden Walzen Korn für Korn geknackt bzw. zerdrückt. Diese Betriebsweise ist üblich, wenn man einen möglichst geringen Anteil allerfeinsten Materials im Produkt wünscht, also eine enge Korngrößenverteilung im Produkt oder eine « steile » Siebrückstandskurve, wie dies beispielsweise bei der Schleifmittelproduktion erwünscht ist, bei der heute bevorzugt die Walzenmühle zum Einsatz kommt. Der Zerkleinerungsgrad ist bei Glattwalzmaschinen auf etwa 1 : 4 begrenzt (« Ullmanns Encyklopädie der technischen Chemie », 4. Auflage 1972, Band 2, Seite 12 linke Spalte). Es ist auch bekannt, Walzenmühlen alternativ zur Einzelkornzerkleinerung nach dem Prinzip der Gutbettzerkleinerung zu betreiben, die zum Beispiel in Fig. 2 der DE-A-1 757 093 dargestellt ist. Dabei wird das zu zerkleinernde Aufgabegut, welches bereits eine vergleichsweise kleine Korngröße aufweisen muß, über einen oberhalb des Walzenspaltes angeordneten vertikalen Schacht in so großer Menge dem Walzenspalt zugeführt, daß das zu zerkleinernde und zwischen die Walzen eingezogene Gut die Walzen auseinanderdrückt und die Teilchen des Aufgabeguts sich im Walzenspalt in einer Schüttung beziehungsweise im Kollektiv beziehungsweise in einem Gutbett gegenseitig quetschen. Dabei stellt sich eine Spaltweite der federnd gegeneinander gedrückten Walzen ein, die größer ist als die Teilchengröße des Aufgabeguts, bei einer auf das Mahlgut wirkenden Anpreßkraft der Walzen von 125 kN/m Walzenlänge. Diese Betriebsweise der Gutbettzerkleinerung in Walzenmühlen wird im Englischen oft « choke feeding » genannt (zum Beispiel « Handbook of Mineral Dressing » von A.F. Taggart, New York, Januar 1948, Seite 4-57 Absatz 4).

Charakteristisch ist für die Gutbettzerkleinerung, daß die Walzenspaltweite größer ist als die Korngröße des Aufgabegutes, das heißt anders gesagt, daß die Korngröße des Aufgabegutes kleiner ist als die Walzenspaltweite, so daß es zur Durchführung der Gutbettzerkleinerung unbedingt notwendig ist, die Korngröße des Aufgabegutes in einer oder mehreren vorgeschalteten investitions- und energieaufwendigen Zerkleinerungsstufen auf eine Größe zu reduzieren, die kleiner ist als der Walzenspalt, sofern nicht bereits von Anfang an das Aufgabegut diese Feinheit hat.

Es ist auch ein zweistufiges Verfahren zur Fein- und Feinstzerkleinerung von Materialien spröden Stoffverhaltens bekannt (DE-B-27 08 053), bei dem die spröden Materialien in einer ersten Stufe unter relativ hohem Druck gepreßt werden, bei einer Walzenmühle mit einer Preßkraft von mehr als 2000 kN pro Meter Walzenlänge, was teils zur Partikelzerstörung, teils zur Erzeugung von Anrissen im Partikelzerstörung, teils zur Erzeugung von Anrissen im Partikelinneren führt und sich in der Bildung von Agglomeraten äußert, die dann in einer zweiten Stufe durch weitere mechanische Beanspruchung zerstört und aufgelöst werden. Die Partikel werden in der ersten Stufe in einer zwischen zwei Flächen zusammengedrückten Materialschüttung gegenseitig zerquetscht, das heißt es handelt sich dabei um die obengenannte Gutbettzerkleinerung, die man im Spalt einer Walzenmaschine realisieren kann, mit allen obegenannten Nachteilen, wie Notwendigkeit von Vorzerkleinerungsmaschinen, die das Aufgabegut auf eine Korngröße zerkleinern müssen, die kleiner ist als die Spaltweite der Walzenmaschine.

Wenn ein großer Zerkleinerungsgrad oder/und große Feinheiten des Mahlprodukts erzielt werden sollen, so hat man bisher zwei oder mehrstufige Mahlverfahren wie Vorzerkleinerung, Mittel- und Feinzerkleinerung angewandt (DE-B-1 138 994). Dabei versuchte man, die Beanspruchungsbedingungen in jeder der Stufen beziehungsweise Zerkleinerungsmaschinen der Größe der zu zerkleinernden Mahlgutpartikeln anzupassen, um den Energiebedarf des gesamten Zerkleinerungsprozesses zu reduzieren. Die zwei- oder mehrstufigen Mahlverfahren mit hintereinandergeschalteten Zerkleinerungsmaschinen verursachen aber insgesamt einen hohen spezifischen Energieverbrauch sowie hohe Investitionskosten. Kugelmühlen zeichnen sich zwar durch einen hohen Zerkleinerungsgrad aus und sind in der Lage, Zementklinkerbrocken auf Zementfeinheit zu vermahlen, jedoch ist der spezifische Energieverbrauch von Kugelmühlen hoch.

Der Erfindung liegt die Aufgabe zugrunde, die Möglichkeit zu schaffen, mit großem Zerkleinerungsgrad sprödes Gut zerkleinern beziehungsweise mahlen zu können, zum Beispiel Zementklinker zu Zement, wobei trotzdem der spezifische Energieverbrauch und der maschinelle Aufwand gering sein soll.

Diese Aufgabe wird gemäß der Erfindung mit einem Verfahren gelöst, das im Anspruch 1 gekennzeichnet ist, ferner mit einer für völlig anormale Zwecke zweckentfremdet verwendete Walzenpresse, welche Verwendung im Anspruch 4 gekennzeichnet ist.

Beim erfindungsgemäßen Verfahren werden in ein und derselben Walzenmaschine für das Mahlgut unmittelbar aufeinanderfolgend das Prinzip der Einzelkornzerkleinerung und das Prinzip der Gutbettzerkleinerung realisiert. Mit dem erfindungsgemäßem Verfahren kann zum Beispiel Zementklinker mit einer Korngröße von 100 mm zu Zement mit einer Korngröße von weit unter 1 mm einstufig gemahlen werden, das heißt, der Bereich der Mittelzerkleinerung (etwa 100 mm bis 3 mm) und wenigstens ein Teil der Feinzerkleinerung (Mahlen auf eine Produktfeinheit von im wesentlichen feiner 1 mm) werden in einer einzigen Maschine realisiert, das heißt, der Zerkleinerungsgrad ist für eine Walzenmaschine ungewöhnlich hoch. Beim erfindungsgemäßen Verfahren werden also die sonst erforderliche Vorzerkleinerungsmaschine und wenigstens ein Teil deren Energieverbrauchs eingespart. Dazu kommt, daß bei der Einzelkornzerkleinerung die einzelnen Körner zerstört und die dabei entstehenden Mahlgutbruchstücke zum großen Teil angerissen und in ihrem Kristallgitter beschädigt werden. Weil beim erfindungsgemäßen Zerkleinerungsverfahren die bei der Einzelkornzerkleinerung entstandenen Mahlgutbruchstücke unmittelbar nach ihrer Entstehung sofort der Gutbettzerkleinerung zugeführt werden, haben die Beschädigungen sowie Störungen und Zerstörungen der Kristallgitter der Bruchstücke keine Zeit, auszuheilen, im Gegensatz zu einem zwei- oder mehrstufigen Zerkleinerungsverfahren, bei dem die Vorzerkleinerung und die Feinzerkleinerung in getrennten Maschinen durchgeführt werden, was der Fall ist, wenn man wie bisher einer Gutbettzerkleinerungs-Walzenmaschine eine eigene Vorzerkleinerungsmaschine vorschaltet. Beim erfindungsgemäßen Verfahren bilden sich also die Kornbeschädigungen und Gitterstörungen und -zerstörungen der aus der Einzelkornzerkleinerung erhaltenen Mahlgutbruchstücke vor der nachfolgenden Kornbeanspruchung nicht zurück, so daß die für die weitere Zerkleinerung der Bruchstücke im Bereich des engsten Walzenspalts aufzuwendende Energie und damit der Gesamtenergieverbrauch des erfindungsgemäßen Zerkleinerungsverfahrens vergleichsweise sehr gering sind.

Charakteristisch für das erfindungsgemäße Zerkleinerungsverfahren mit kombinierter Einzelkornzekleinerung und Gutbettzerkleinerung im Walzenspalt ein und derselben Walzenmaschine ist, daß die Korngröße eines wesentlichen Teils des dem Walzenspalt aufzugebenden Mahlgutes größer ist als die Weite des Walzenspalts.

Nach einem besonderen Merkmal der Erfindung beträgt die auf das Mahlgut wirkende Preßkraft der Walzen der Walzenmaschine mehr als 2 MN/m Walzenlänge. Die Anpreßkraft ist also sehr hoch, um eine möglichst große Zerstörung der Partikel zu bewirken. Wendet man bei der Gutbettzerkleinerung hinreichend hohe Preßdrücke an, so kann es zu einer Agglomeration der zerkleinerten Partikeln kommen. Einige Stoffe neigen besonders zur Agglomeration, zum Beispiel Stoffe mit kubisch flächenzentriertem Gitter wie Steinsalz und Sylvin oder auch Kalkstein. Andere Stoffe, zum Beispiel Quarz, neigen kaum zur Agglomeration. Daß es bei der Zerkleinerung unter Anwendung sehr hoher Preßdrücke zur Agglomeration der zerkleinerten Partikeln kommen kann, ist aus der SU-PS 490 498 an sich bekannt. Dort wird eine Pressung des zu zerkleinernden Gutes unter allseitigem hydrostatischen Druck vorgeschlagen, wobei die Druckfestigkeit des zu zerkleinernden Materials um 20 bis 30 % überschritten wird, unter bewußter Bildung von Agglomeraten, die dann in einer zweiten Stufe aufgelöst werden. Sofern es beim erfindungsgemäßen Zerkleinerungsverfahren bei der Anwendung der hohen Preßkraft von mehr als 2 MN/m Walzenlänge im Walzenspalt zur Agglomeration der zerkleinerten Partikeln kommt, so werden diese Agglomerate in einer der Walzenmaschine nachgeschalteten Einrichtung wie zum Beispiel Rohrmühle beziehungsweise Kugelmühle, Streuteller -Windsichter oder Klassiersicht aufgelöst, das heißt, es wird die zugleich desagglomerierende Wirkung eines Geräts ausgenutzt, das primär für einen anderen Verfahrensschritt eingesetzt wird ; die Desagglomeration kann aber auch in einem der Walzenmaschine nachgeschalteten, nur desagglomerierend wirkenden Gerät bewerkstelligt werden. Jedenfalls ist zur Auflösung etwa gebildeter Gutagglomerate nur ein geringer Energieaufwand erforderlich.

Die Erfindung und deren weiteren Merkmale und Vorteile werden anhand der in den Figuren schematisch dargestellten Ausführungsbeispiele näher erläutert. Es zeigt :

Figur 1 das erfindungsgemäße Verfahren mit kombinierter Einzelkornzerkleinerung und Gutbettzerkleinerung im Walzenspalt einer Walzenmaschine und mit zugehörigem Druckdiagramm,

Figuren 2 bis Fig. 6 verschiedene Ausgestaltungen des erfindungsgemäßen Zerkleinerungsverfahrens und einer Zerkleinerungsanlage jeweils beginnend mit einer Walzenmaschine.

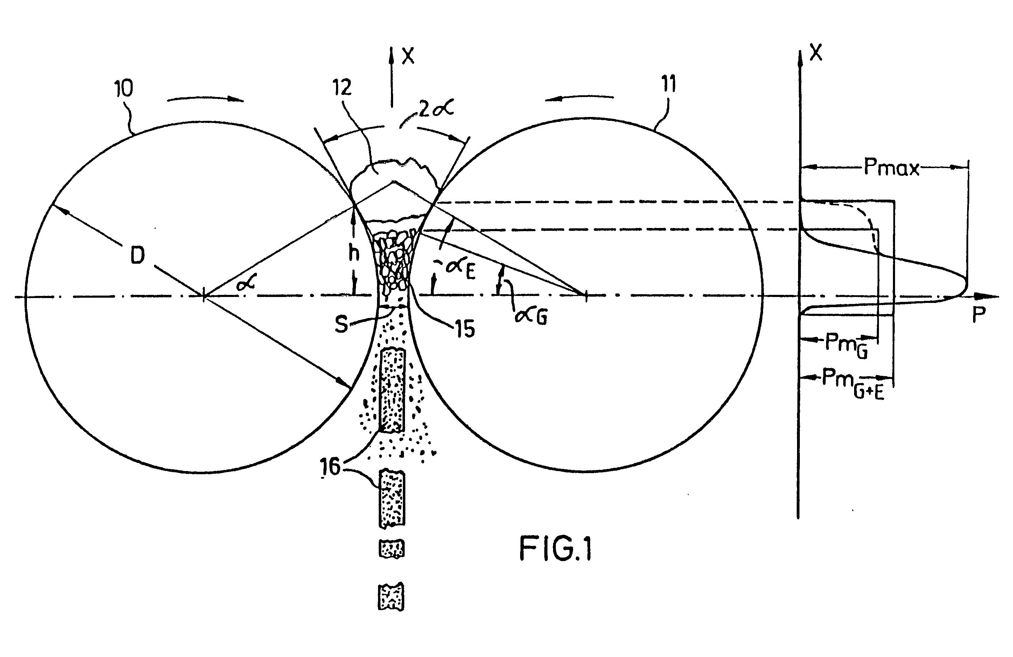

Bei der Pressung in einem Spalt zwischen zwei Walzen beginnt von einem Niveau an, das durch den halben Einzugswinkel $\alpha$ (Fig. 1) bestimmt ist, ein Druckaufbau, der zu einer Gegenkraft führt, welche die Walzen gegen die üblicherweise vorhandene mechanische oder hydraulische Abfederung auseinanderzudrücken sucht. Diese Gegenkraft ist leicht zu messen oder aus Meßwerten zu ermitteln. Im Falle einer hydraulischen Abfederung ist die Gegenkraft $F = p_{hydr.} \times A$ mit $p_{hydr.}$ als dem Druck im hydraulischen System (mittels eines Manometers leicht zu messen) und mit A als der Kolbenfläche (gegebenenfalls als der Summe der Kolbenflächen).

In Fig. 1 ist zwischen den Walzen 10 und 11 einer Walzenmaschine ein nicht vorzerkleinerter Zementklinkerbrocken 12 eingezeichnet. Der qualitative Druckverlauf im Walzenspalt ist in Fig. 1 ebenfalls eingezeichnet. Der Druck p nimmt vom Niveau x = h, bestimmt durch den Schnittpunkt des halben Einzugswinkels $\alpha$ mit der Walzenumfangslinie stetig zu bis zu einem Niveau kurz oberhalb der Ebene der Walzenachsen und fällt dann steil bis auf Null ab. Der maximale Druck des Druckdiagramms ist mit $p_{max}$ angegeben, während der mittlere Druck der Gutbettzerkleinerung, also ohne vorgeschaltete Einzelkornzerkleinerung mit $p_{mG}$ und der mittlere Druck der Gutbettzerkleinerung einschließlich der im gleichen Walzenspalt vorgeschalteten Einzelkornzerkleinerung mit $p_{mG \rightarrow E}$ angegeben sind. Quantitativ läßt sich das Druckdiagramm bis heute nicht ermitteln. Die Druckverteilungen können bei gleicher Anpreßkraft unterschiedlich sein. Damit können sich sowohl für den mittleren Druck im Walzenspalt als auch für den maximalen Druck in der Nähe der engsten Stelle des Walzenspaltes unterschiedliche Werte ergeben.

Bei Versuchen mit einer Walzenmaschine, die einer Kugelmühle zur Mahlung von Zementklinker vorgeschaltet war, wurde überraschenderweise festgestellt, daß es mit einer solchen Walzenmaschine möglich ist,

a) in einem Arbeitsgang und in einer Maschine die Vorzerkleinerung des Zementklinkers auszuführen und einen wesentlichen Anteil des Klinkers fein zu zerkleinern, das heißt feiner 1 mm und damit zugleich

b) eine Einzelkornzerkleinerung und eine Gutbettzerkleinerung in ein und derselben Maschine und in einem Arbeitsgang zu realisieren. Dies sei an folgendem Beispiel erläutert :

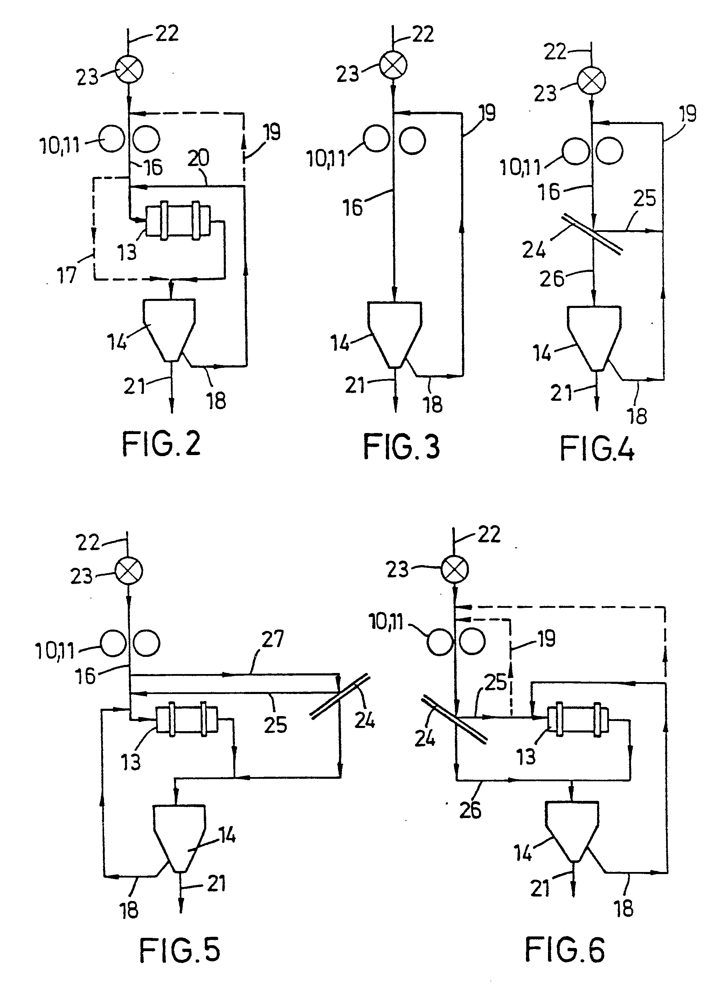

Die benutzte Zweiwalzenmaschine nach Fig. 1 hatte einen Walzendurchmesser D von 900 mm und eine Walzenbreite von 250 mm und sie wurde mit einer Walzenumfangsgeschwindigkeit von $v_u$ = 0.31 bis 0,43 m/sec betrieben. Diese Walzenmaschine 10, 11 war gemäß dem Fließbild in Fig. 2 einer Becherwerks-Umlaufmahlanlage vorgeschaltet, bestehend aus einer Zweikammer-Rohrmühle 13 mit 2,2 m Durchmesser und 14 m Länge, einem Zyklon-Umluftsichter 14 und mit jeweils einem Becherwerk zwischen Zweiwalzenmaschine und Rohrmühle sowie zwischen Rohrmühle und Sichter.

Der als Presse betriebenen Walzenmaschine 10, 11 wurde nicht vorzerkleinerter Zementklinker aufgegeben mit folgender Korngrößenverteilung :

Korngrößenverteilung des Aufgabeguts zur Walzenmaschine 10, 11

| Korngröße mm | Anteile % der Masse | kumulative Anteile % der Masse |
|---|---|---|
| > 45,0 | 7,7 | 7,7 |
| 45,0 – 31,5 | 4,5 | 12,2 |
| 31,5 – 22,4 | 8,3 | 20,5 |
| 22,4 – 16,0 | 1,5 | 22,0 |
| 16,0 – 11,2 | 3,8 | 25,8 |
| 11,2 – 8,0 | 7,5 | 33,3 |
| 8,0 – 5,6 | 5,9 | 39,2 |
| 5,6 – 4,0 | 9,4 | 48,6 |
| 4,0 – 2,8 | 13,4 | 62,0 |
| 2,8 – 2,0 | 10,9 | 72,9 |
| 2,0 – 1,0 | 7,6 | 80,5 |
| 1,0 – 0,5 | 9,9 | 90,4 |
| 0,5 – 0,315 | 4,3 | 94,7 |
| 0,315 – 0,25 | 4,1 | 98,8 |
| < 0,25 | 1,2 | 100,0 |

Die maximale Korngröße des Aufgabeguts betrug 100 mm, seine Schüttdichte 1 600 kg/m³. Die Walzenanpreßkraft betrug im Betrieb 6,1 bis 8,6 MN/m. Zwischen den Lagerböcken der Walzen 10, 11 befand sich ein Anschlag beziehungsweise Distanzstück, das den Walzenspalt aus eine Mindestweite von $S_0$ = 14 mm begrenzte, damit bei der Einzelkornzerkleinerung in den Walzenspalt auch noch große Brocken eingezogen werden und damit die Walzen nicht gegeneinander schlagen, wenn dem Walzenspalt kein Aufgabegut mehr zugeführt wird. In Fig. 1 ist veranschaulicht, wie die bei der Einzelkornzerkleinerung entstandenen Mahlgutbruchstücke 15 durch die Gutbettzerkleinerung im Bereich des engsten Walzenspalts weiter zerkleinert werden. Der Zementklinker trat aus dem Walzenspalt zerkleinert und teilweise agglomeriert, das heißt zu einer Schülpe 16 verpreßt aus. Die Schülpendicke s, das heißt die Walzenspaltweite im Betrieb, betrug rund 20 mm. Die Raumdichte der Schülpen 16 betrug 2 400 kg/m³.

Aus diesen Daten ergibt sich gemäß Fig. 1 folgendes : Die größten Stücke 12 des Aufgabeguts werden bei einem Winkel $\alpha_E$ = 23° von den Walzen 10, 11 eingezogen, das heißt bei h = 180 mm über der Ebene der Walzenachse. Der horizontale Abstand zwischen den Walzenumfangsflächen beträgt dort s – D (1 — cos$\alpha_E$) = 92 mm. Das Aufgabegut als ganzes wird von 1 600 auf 2 400 kg/m³ verdichtet. das heißt im Verhältnis 1 : 1,5. Dies bedeutet, daß dort, wo der horizontale Abstand der Walzenumfangsflächen 31,08 mm beträgt, der Raum zwischen den Walzen 10, 11 mit dem geschütteten Aufgabegut ausgefüllt ist. Hier beginnt der Bereich der Gutbettzerkleinerung, das ist der Fall bei einem Winkel $\alpha_G$ = 9° beziehungsweise h = 66 mm über der Ebene der Walzenachsen. Während im Fachschrifttum über Walzenmühlen immer von einem einzigen Einzugswinkel die Rede ist, sind beim erfindungsgemäßen Zerkleinerungsverfahren zwei Einzugswinkel wirksam, nämlich einer für die Einzelkornzerkleinerung ($\alpha_E$) und einer für die Gutbettzerkleinerung ($\alpha_G$). Vor allem ergibt sich aus dem Druckdiagramm der Fig. 1, daß beim erfindungsgemäßen Verfahren die Einzelkornzerkleinerung neben der Gutbettzerkleinerung fast kostenlos praktisch ohne zusätzlichen Energieaufwand miterledigt wird. Beim erfindungsgemäßen Verfahren sind die Technologien einer Walzenmühle und einer Walzenpresse mit an sich entgegengesetzten Zielrichtungen miteinander kombiniert, womit das weiter unten ziffernmäßig angegebene überraschende Ergebnis der großen Ersparnis an Zerkleinerungsenergie erreicht wird.

Der aus der Walzenmaschine 10, 11 austretende Klinker wies nach vorsichtiger Desagglomeration folgende Korngrößenverteilung auf :

Korngrößenverteilung des aus der Walzenmaschine 10, 11 ausgetretenen Gutes nach vorsichtiger Desagglomeration

| Korngröße mm | | Anteile % der Masse | kumulative Anteile % der Masse |
|---|---|---|---|
| > | 16,0 | 6,8 | 6,8 |
| 16,0 | – 8,0 | 9,3 | 16,1 |
| 8,0 | – 4,0 | 20,2 | 36,3 |
| 4,0 | – 2,0 | 18,1 | 54,4 |
| 2,0 | – 1,0 | 12,9 | 67,3 |
| 1,0 | – 0,5 | 9,6 | 76,9 |
| 0,5 | – 0,25 | 7,3 | 84,2 |
| 0,25 | – 0,125 | 5,6 | 89,8 |
| 0,125 | – 0,09 | 2,5 | 92,3 |
| 0,09 | – 0,063 | 2,2 | 94,5 |
| < | 0,063 | 5,5 | 100,0 |

Die Zementklinkermahlanlage der Fig. 2 einschließlich aller Fördermittel und einschließlich der vorgeschalteten Zweiwalzenmaschine 10, 11 verbraucht unter den obengenannten Bedingungen je t Klinker 35,6 kWh an elektrischer Energie. Sie produzierte dabei 21 t Zement stündlich mit einer Feinheit von 2 825 cm²/g gemessen nach BLAINE. Ohne die vorgeschaltete Zweiwalzenmaschine 10, 11 konnte die Mahlanlage nur 15 t/h Zement gleicher Feinheit produzieren und sie verbrauchte dabei 45,9 kWh/t. Das heißt, die Vorschaltung der Zweiwalzenmaschine 10, 11 erbrachte eine Steigerung der Durchsatzrate um 40 % bei einer gleichzeitigen Verminderung des spezifischen Energiebedarfs um 22 % !

Die Oberfläche der Walzen 10, 11 der Walzenmaschine kann glatt sein. Um die Einzugsbedingungen im Walzenspalt noch zu verbessern, können auf die glatte Walzenoberfläche gegebenenfalls vorspringende Profile aufgebracht sein, zum Beispiel Schweißraupen in V-Form. Damit werden gleichzeitig die entstehenden Preßschülpen mit Sollbruchstellen versehen. Die Walzen können aus Segmenten zusammengesetzt sein und Endscheiben aufweisen. Zur Erleichterung der Desagglomeration der die Zweiwalzenmaschine 10, 11 verlassenden Agglomerate können Mahlhilfsmittel zugesetzt werden.

Nach dem Fließbild der Fig. 2 ist auch vorgesehen, daß wenigstens ein Teil des die Walzenmaschine 10, 11 verlassenden Gutes 16, das Agglomerate wie Schülpen enthält, über die gestrichelte Leitung 17 unter Umgehung der Rohrmühle 13 unmittelbar dem Sichter 14 zugeführt wird, dessen grobe Fraktion (Griese) 18 über die Leitung 19 zur Walzenmaschine 10, 11 und/oder über die Leitung 20 zur Rohrmühle 13 zur Mahlung auf Endfeinheit zurückgeführt wird. Der auf Endfeinheit gemahlene Zement verläßt als Fertiggut 21 den Sichter 14. Zur Anpassung der Leistung der Walzenmaschine 10, 11 (Pressenleistung) an die Leistung der Mahlanlage erfolgt in Abhängigkeit der vom Sichter 14 zur Zerkleinerung zurückgeführten Griesemenge 18 ein Regeleingriff auf die Frischgutzufuhrmenge 22 (Zementklinker) zur Walzenmaschine 10, 11 über ein Regelorgan 23 wie verstellbare Klappe, Vibrorinne, Stopfschnecke oder dergleichen und/oder ein Regeleingriff auf die Walzendrehzahl der Walzenmaschine.

Beim Ausführungsbeispiel der Fig. 3 wird die gesamte Menge des die Walzenmaschine 10, 11 verlassenden Gutes 16, das Agglomerate enthält, dem Sichter 14 zugeführt, dessen grobe Fraktion 18 (Griese) über Leitung 19 zur Walzenmaschine zurückgeführt wird. Bei der Ausführungsform der Fig. 4 ist im Unterschied zu Fig. 3 zwischen der Walzenmaschine 10, 11 und dem Sichter 14 ein Klassiersieb 24 eingeschaltet, das aus dem von der Walzenmaschine 10, 11 unmittelbar zum Sichter geführten agglomerathaltigen Gut 16 die grobe Fraktion 25 zur Entlastung des Sichters 14 herausklassiert. Die grobe Fraktion 25 wird zusammen mit den Griesen 18 des Sichters 14 über Leitung 19 zur Walzenmaschine 10, 11 zurückgeführt, wahrend die feine Fraktion 26 des Siebes 24 unmittelbar zum Sichter 14 weitergeleitet wird.

Beim Ausführungsbeispiel der Fig. 5 wird das die Walzenmaschine 10, 11 verlassende agglomerathaltige Gut 16 teilweise der Rohrmühle 13 und teilweise über Leitung 27 einem Sieb 24 zugeleitet. Die grobe Fraktion (Griese) 18 des Sichters 14 und die grobe Fraktion 25 des Siebes 24 werden zur Kugelmühle zurückgeführt. Beim Ausführungsbeispiel der Fig. 6 kann im Unterschied zu Fig. 4 die grobe Fraktion 25 des Siebes 24 anstatt über Leitung 19 zurück zur Walzenmaschine 10, 11 zur Rohrmühle 13 und die grobe Fraktion (Griese) 18 des Sichters 14 kann anstatt zur Walzenmaschine 10, 11 zur Rohrmühle 13 zurückgeführt werden. Die Rohrmühle 13 kann eine Kugelmühle mit nur einer einzigen Mahlkammer sein oder eine Mahlkammer aufweisen, in der gegebenenfalls autogen gemahlen wird. Jedenfalls ist die Kugelgattierung der Kugelmühle 13 dem veränderten Mühlenaufgabegut (Zementklinkerschülpen) angepaßt. Anstatt der Rohrmühle 13 kann auch eine Wälzmühle, Schwingmühle, oder eine geeignete andere Mühle vorgesehen sein.

**Patentansprüche**

1. Verfahren zur kontinuierlichen Druckzerkleinerung spröden Mahlgutes, wie zum Beispiel Zementklinker, im Walzenspalt einer Walzenmaschine, dadurch gekennzeichnet, daß dem Walzenspalt einer Walzenpresse ein Mahlgut aufgegeben wird, das sich bezüglich Menge und Korngrößenverteilung derart zusammensetzt, daß diejenigen Körner des Mahlgutes die größer als die sich im Betrieb einstellende Spaltweite sind, zunächst durch eine Einzelkornzerkleinerung im weiteren Teil des Walzenspaltes vorzerkleinert werden und darunterliegend unmittelbar danach im Bereich des engsten Walzenspaltes das gesamte Mahlgut durch eine Gutbettzerkleinerung zerkleinert wird.

2. Verfahren nach Anspruch 1, dadurch gekennzeichnet, daß das die Walzenmaschine verlassende Gut in einem Sichter in Fertiggut mit Fertiggutfeinheit und in eine grobe Fraktion (Griese) sortiert wird, welch letztere zur Aufgabe und/oder zum Austrag der Walzenmaschine zurückgeführt wird.

3. Verfahren nach Anspruch 2, dadurch gekennzeichnet, daß in Abhängigkeit der vom Sichter zur Zerkleinerung zurückgeführten Griesemenge ein Regeleingriff auf die Frichgutzufuhrmenge zur Walzenmaschine und/oder auf die Walzendrehzahl der Walzenmaschine erfolgt.

4. Verwendung einer Walzenpresse mit zwei gegenläufig drehbaren, durch einen Walzenspalt voneinander getrennten Walzen (10, 11), dadurch gekennzeichnet, daß dem Walzenspalt ein Mahlgut aufgegeben wird, das sich bezüglich Menge und Korngrößenverteilung derart zusammensetzt, daß im weiteren Teil des Walzenspaltes eine Einzelkornzerkleinerung und gleichzeitig im Bereich des engsten Walzenspaltes eine Gutbettzerkleinerung erfolgen.

5. Verwendung einer Walzenpresse nach Anspruch 4, dadurch gekennzeichnet, daß die auf das Mahlgut wirkende Preßkraft der Walzen der Walzenpresse (10, 11) mehr als 2 MN/m Walzenlänge beträgt.

6. Verwendung einer Walzenpresse nach den Ansprüchen 4 oder 5, dadurch gekennzeichnet, daß die untere Umfangsgeschwindigkeit, daß die untere Umfangsgeschwindigkeit $v_u$ der Walzen der Walzenpresse (10, 11) 0,31 bis 0,43 m/sec beträgt.

7. Verwendung einer Walzenpresse nach Anspruch 4, dadurch gekennzeichnet, daß bei einem Durchmesser der Walzen der Walzenpresse (10, 11) > 750 mm, vorzugsweise > 900 mm und bei einer Korngröße des dem Walzenspalt aufzugebenden Mahlgutes bis etwa 100 mm der halbe Einzugswinkel $\alpha_E$ der Einzelkornzerkleinerung in einem Bereich von 10 bis 30° und der halbe Einzugswinkel $\alpha_G$ der Gutbettzekleinerung in einem Bereich von 3 bis 15° liegen.

8. Verwendung einer Walzenpresse nach den Ansprüchen 4 bis 7, dadurch gekennzeichnet, daß eine Mindestbreite des Walzenspaltes ($s_O$ etwa = 14 mm) nicht unterschritten wird.

9. Verwendung einer Walzenpresse nach einem oder mehreren der Ansprüche 4 bis 8, dadurch gekennzeichnet, daß die Walzenpresse (10, 11) einer eine Rohrmühle (13) und wenigstens einen Sichter (14) umfassenden Umlaufmahlanlage zur Erhöhung von deren Fertiggutleistung vorgeschaltet ist.

**Claims**

1. A method for the continuous pressure milling of brittle material to be crushed, such as cement clinker for example, in that roll gap of a roll machine, characterised in that a material to be crushed is fed to the roll gap of a roll press, the material being composed in respect of the amount and distribution of grain size so that those grains of the material which are larger than the gap width occurring in operation are first disintegrated by crushing of individual grains in the wider part of the roll gap, and the whole of the material is crushed immediately thereafter, underneath, in the region of the narrowest roll gap, by milling of a body of material.

2. A method as claimed in claim 1, characterised in that the material leaving the roll machine is separated in a grader into finished product of the required fineness, and a coarse fraction (grit), which latter is recycled to the feed and/or the discharge of the roll machine.

3. A method as claimed in claim 2, characterised in that depending on the amount of grit recycled from the grader for milling a control is effected of the amount of fresh material supplied to the roll machine and/or the speed of rotation of the rolls of the roll machine.

4. The use of a roll press having two rolls (10, 11) which are rotatable in opposite directions and are separated from one another by a roll gap, characterised in that a material to be crushed is fed to the roll gap, which material is composed, in respect of the amount and distribution of grain size, such that a crushing of individual grains is effected in the wider part of the roll gap and at the same time milling of a body of material is effected in the region of the narrowest roll gap.

5. The use of a roll press as claimed in claim 4, characterised in that the compressive force of the rolls of the roll press (10, 11) acting on the material to be crushed is more than 2 MN/m of roll length.

6. The use of a roll press as claimed in claims 4 or 5, characterised in that the lower circumferential speed $v_u$ of the rolls of the roll press (10, 11) is 0.31 to 0.43 m/sec.

7. The use of a roll press as claimed in claim 4, characterised in that with a diameter of the rolls (10, 11) of the roll press > 750 mm, preferably > 900 mm, and with a grain size of the material to be crushed which is to be fed to the roll gap up to about 100 mm, the half entry-angle $\alpha_E$ for the individual grain crushing lies in a range from 10 to 30°, and the half entry-angle $\alpha_G$ for the material-body milling lies in a range from 3 to 15°.

8. The use of a roll press as claimed in claims 4 to 7, characterised in that there is no reduction below a minimum width of the roll gap ($s_O$ = about 14 mm).

9. The use of a roll press as claimed in one or more of the claims 4 to 8, characterised in that the roll press (10, 11) is connected to a subsequent re-cycling grinding installation comprising a tube mill (13) and at least one grader (14) to increase its output of finished product.

### Revendications

1. Procédé pour le broyage continu par pression d'un produit à broyer fragile comme, par exemple le clinker de cimenterie, dans la fente entre cylindres d'une machine à cylindres, caractérisé en ce qu'on charge dans la fente entre cylindres d'une presse à cylindres un produit à broyer qui est d'une composition en quantité et en distribution granulométrique, telle que les grains du produit à broyer qui sont plus grands que la largeur de fente qui s'établit en fonctionnement soient tout d'abord préfragmentés par une fragmentation grain par grain dans la partie la plus large de la fente entre cylindres tandis qu'au-dessous, immédiatement après, dans la région de la partie la plus étroite de la fente entre cylindres, la totalité du produit à broyer est fragmentée par une fragmentation en lit de produit.

2. Procédé selon la revendication 1, caractérisé en ce que le produit sortant de la machine à cylindres est classé dans un séparateur pneumatique en produit fini possédant une finesse de produit fini et une fraction grossière (1e menu), cette fraction étant renvoyée à la charge et/ou à la sortie de la machine à cylindres.

3. Procédé selon la revendication 2, caractérisé en ce que, selon la quantité de menu qui est renvoyée à la fragmentation en provenance du séparateur agissant pneumatique, il se produit une intervention de régulation sur le débit d'amenée de produit neuf à la machine à cylindres et/ou sur la vitesse de rotation des cylindres de la machine à cylindres.

4. Utilisation d'une presse à cylindres possédant deux cylindres (10, 11) tournant l'un en sens inverse de l'autre et séparés par une fente entre cylindres, caractérisée en ce qu'on charge dans la fente entre cylindres un produit à broyer qui est d'une composition, en quantité et en distribution granulométrique, telle qu'il se produise une fragmentation grain par grain dans la partie large de la fente entre cylindres et, en même temps, une fragmentation en lit de produit dans la région de la partie la plus étroite de la fente entre cylindres.

5. Utilisation d'une presse à cylindres selon la revendication 4, caractérisée en ce que la force de compression des cylindres de la presse à cylindres (10, 11) qui agit sur le produit à broyer est de plus de 2 MN/m de longueur des cylindres.

6. Utilisation d'une presse à cylindres selon les revendications 4 et 5, caractérisée en ce que la vitesse circonférentielle inférieure $v_u$ des cylindres de la presse à cylindres (10, 11) est de 0.31 à 0.43 m/s.

7. Utilisation d'une presse à cylindres selon la revendication 4, caractérisée en ce que, pour un diamètre de cylindres de la presse à cylindres (10, 11) > 750 mm, de préférence > 900 mm et pour une grosseur de grain du produit à broyer qu'il s'agit de charger dans la fente entre cylindres allant jusqu'à environ 100 mm, le demi-angle d'engrènement $\alpha_E$ de la fragmentation grain par grain est dans l'intervalle de 10 à 30° et le demi-angle d'engrènement $\alpha_G$ de la fragmentation en lit de matière est dans l'intervalle de 3 à 15°.

8. Utilisation d'une presse à cylindres selon les revendications 4 à 7, caractérisée en ce que la largeur de la fente entre cylindres ne descend pas au-dessous d'une largeur minimum $(S_O)$ = à peu près 14 mm.

9. Utilisation d'une presse à cylindres selon une ou plusieurs des revendications 4 à 8, caractérisée en ce que la presse à cylindres (10, 11) est montée en amont d'une installation de broyage à recirculation comprenant un broyeur tubulaire (13) et au moins un séparateur pneumatique (14), afin d'accroître la capacité de production de produit fini.

FIG.1

FIG.2

FIG.3

FIG.4

FIG.5

FIG.6